# EUROPEAN PATENT APPLICATION

(11) **EP 3 093 587 A1**
(43) Date of publication of application: **16.11.2016**
(21) Application number: 16168804.9
(22) Date of filing: 09.05.2016
(51) Int. Cl.: F25D 11/00, B60H 1/32, F25D 19/00, F25D 23/00

(54) **TRANSPORTATION REFRIGERATION UNIT AND TRAILER**

(30) Priority: 11.05.2015 JP 2015096190
(71) Applicant: Mitsubishi Heavy Industries, Ltd., Tokyo 108-8215 (JP)
(72) Inventor: NARITA, Sadaharu, Minato-ku, Tokyo, 108-8215 (JP); JINNO, Hiroki, Minato-ku, Tokyo, 108-8215 (JP); HOKAZONO, Toshiyuki, Minato-ku, Tokyo, 108-8215 (JP); HOSHI, Shintaro, Minato-ku, Tokyo, 108-8215 (JP)
(74) Representative: Intès, Didier Gérard André

(57) **Abstract**

Provided are a transportation refrigeration unit (13) and a trailer refrigeration unit capable of reducing noise and efficiently cooling strong electric system facilities. The transportation refrigeration unit includes a box body (24) provided at a front side of a transportation container and having opening sections (32) at both sides in a width direction, a refrigeration cycle section, a power source configured to generate power driving a compressor, a blower section configured to flow air (A) into the box body (24) from one (32) of the opening sections provided at a first side in the width direction and to discharge the air (A) from the other opening section provided at a second side in the width direction, and an electric component unit (27) disposed closer to the first side in the width direction than the power source and having strong electric system facilities configured to drive the compressor and light electric system facilities configured to control driving of the heat pump, wherein a portion of an outer surface of the electric component (27) is a heat exchange surface (37) which can exchange heat with the air flowing into the box body (24) and flowing in the width direction, and at least the strong electric system facilities are connected to the heat exchange surface (37) so as to be able to transfer heat.

## Description

### [Technical Field]

The present disclosure relates to a transportation refrigeration unit and a trailer.

### [Background Art]

There are trailer such as semitrailer towed by tractors on which containers having transportation refrigeration units are mounted. Such transportation refrigeration units include a so-called nose mount type transportation refrigeration unit which extends from a front wall of a container to a space above a tractor and a so-called flash mount type transportation refrigeration unit installed at a narrow space between a container and a tractor.

Transportation refrigeration units also include a type of transportation refrigeration unit which is driven by power supplied from a tractor and a type of transportation refrigeration unit which can be independently driven without a tractor. In the independent type of transportation refrigeration unit, a sub engine, and so on are mounted as a power source dedicated to the refrigeration unit separate from an engine of a tractor.

Patent Citation 1 discloses a transportation refrigeration unit on which a sub engine for power generation is mounted. In the transportation refrigeration unit of Patent Citation 1, a power generator is configured to be driven by the sub engine to supply power from the power generator to a compressor of the refrigeration unit. In addition, the transportation refrigeration unit drives a radiator fan using the sub engine, takes in external air from a suction ventilation port formed in a lateral surface of a box body and a suction ventilation port formed in a front surface of the box body, and cools a controller, a radiator, and an engine. The air used for the cooling is discharged from a discharge ventilation port formed in a lateral surface opposite to the suction ventilation port.

### [Citation List]

### [Patent Literature]

[Patent Citation 1] Japanese Unexamined Patent Application, First Publication No. S62-091773

### [Summary of Invention]

### [Technical Problem]

In the above-described transportation refrigeration unit disclosed in Patent Citation 1, there is a demand for further noise reduction. However, in this type of transportation limitation unit, it is necessary not to reduce a volume of a container and there is a restriction on an installation space. For this reason, it is difficult to install a soundproof material, and so on. In addition, a plurality of openings are formed in the transportation refrigeration unit disclosed in Patent Citation 1. For this reason, the noise of the engine easily leaks outside through the openings. For example, if areas of the openings are reduced as a measure against noise, the amount of air supplied inside the box body is decreased while performance of a radiator fan is maintained. For this reason, a temperature of particularly strong electric system facilities inside the box body is likely to increase and adversely affect surrounding facilities.

The present invention provides a transportation refrigeration unit and a trailer= capable of reducing noise and efficiently cooling strong electric system facilities.

### [Solution to Problem]

According to a first aspect of the present invention, a transportation refrigeration unit includes: a transportation container; a box body provided at a front side of the transportation container and having opening sections at both sides in a width direction of the transportation container; a refrigeration cycle section having an evaporator disposed in the transportation container and a condenser, a compressor, and an expansion valve disposed in the box body; a power source provided at a center in a width direction in the box body and configured to generate power driving the compressor; a blower section disposed in the box body, configured to flow air into the box body from one of the opening sections provided at a first side in the width direction of the transportation container, and configured to discharge the air in the box body from the other opening section provided at a second side in the width direction of the transportation container; and an electric component unit disposed in the box body closer to the first side in the width direction of the transportation container than the power source and having strong electric system facilities configured to drive the compressor and light electric system facilities configured to control driving of the refrigeration cycle section, wherein a portion of an outer surface of the electric component unit is a heat exchange surface which is capable of exchanging heat with the air flowing into the box body and flowing in the width direction of the transportation container, and at least the strong electric system facilities are connected to the heat exchange surface so as to be capable of transferring heat.

With such a constitution, the air flowing into the box body from the first side by operation of the blower section can be brought into contact and exchange heat with the heat exchange surface of the electric component unit at the first side of the power source. The strong electric system facilities connected to the heat exchange surface can be cooled through the heat exchange. Also, after the power source is cooled by the air used for the cooling of the strong electric system facilities, the air can be discharged outside the box body from the second side. For this reason, the strong electric system facilities can be efficiently cooled. In addition, since the opening sections are provided only at the first side and the second side in the width direction of the box body, noise of the power source can be prevented from leaking outside compared with when a plurality of opening sections is provided.

According to a second aspect of the present invention, in the transportation refrigeration unit, the electric component unit in the first aspect may include a first electric component box configured to accommodate the strong electric system facilities and a second electric component box configured to accommodate the light electric system facilities, the first electric component box and the second electric component box may be disposed to be arranged at an interval in forward and rearward directions, and the first electric component box may have the heat exchange surface at a side at which the second electric component box is disposed in the forward and rearward directions.

With such a constitution, a space between the first electric component box and the second electric component box can be used as the passage through which the air flows. For this reason, a cross section of the passage can be reduced to increase a flow rate of the air so that heat exchange is efficiently performed. In addition, since the strong electric system facilities and the light electric system facilities are accommodated in separate boxes, heat, electromagnetic waves, and so on from the strong electric system facilities can be prevented from adversely affecting the light electric system facilities. Also, since one of the first electric component box and the second electric component box is disposed in the front of the passage between the first electric component box and the second electric component box, noise of the power source passing through the passage can be limited from leaking forward from the box body.

According to a third aspect of the present invention, in the second aspect, the transportation refrigeration unit may further include a frame section configured to support one of the first electric component box and the second electric component box which is disposed in the front to be swingable in forward and rearward directions.

With such a constitution, the front electric component box between the first electric component box and the second electric component box supported by the frame section can swing forward, for example, so that the electric component box which is disposed in the rear can be easily accessed.

According to a fourth aspect of the present invention, in the transportation refrigeration unit, the electric component unit in the first aspect may include a first electric component box configured to accommodate the strong electric system facilities and having the heat exchange surface; and a second electric component box configured to accommodate the light electric system facilities and configured such that the first electric component box and the second electric component box are disposed at an interval in vertical direction, wherein the first electric component box may have the heat exchange surface at a side at which the second electric component box is disposed in vertical direction.

With such a constitution, the space between the first electric component box and the second electric component box can be used as the passage through which the air flows. For this reason, the cross section of the passage can be reduced to increase the flow rate of the air so that heat exchange is efficiently performed. In addition, since the strong electric system facilities and the light electric system facilities are accommodated in separate boxes, heat, electromagnetic waves, etc. from the strong electric system facilities can be prevented from adversely affecting the light electric system facilities. Also, since the first electric component box and the second electric component box are disposed to be vertically arranged, access to both of the first electric component box and the second electric component box is good. Thus, workloads imposed on an operator during maintenance can be reduced. The first electric component box and the second electric component box are disposed to be vertically arranged so that the first electric component box and the second electric component box are above and below the passage between the first electric component box and the second electric component box. Thus, noise of the power source passing through the passage can be prevented from leaking in upward and downward directions of the box body.

According to a fifth aspect of the present invention, in the transportation refrigeration unit, the heat exchange surface in any one of the first to fourth aspects may have a heat radiating fin section.

With such a constitution, since a surface area of the heat exchange surface can be increased, efficiency of heat exchange can be improved to promote heat radiation of the strong electric system facilities.

According to a sixth aspect of the present invention, a trailer includes the transportation refrigeration unit in any one of the first to fifth aspects.

With such a constitution, since the transportation refrigeration unit does not become larger, the load capacity can be prevented from being decreased. In addition, since quietness and cooling performance of the strong electric system facilities can be enhanced, the merchantability can be further improved.

### [Advantageous Effects of Invention]

According to the above-described transportation refrigeration unit, noise can be reduced and strong electric system facilities can be efficiently cooled.

### [Brief Description of Drawings]

FIG. 1 is a side view of a vehicle in a first embodiment of the present invention.
FIG. 2 is a view showing a schematic constitution of a refrigeration cycle section included in a transportation refrigeration unit in the first embodiment of the present invention.
FIG. 3 is a view showing a schematic constitution of the transportation refrigeration unit in the first embodiment of the present invention.
FIG. 4 is a view showing a layout of a lower box section of a box body from above in the first embodiment of the present invention.
FIG. 5 is an enlarged view of an electric component unit of FIG. 4 in the first embodiment of the present invention.
FIG. 6 is a view showing a state in which a first electric component box of FIG. 5 swings forward.
FIG. 7 is a view corresponding to FIG. 5 in a second embodiment of the present invention.
FIG. 8 is a view of an electric component unit from the front in a third embodiment of the present invention.

### [Description of Embodiments]

### [First embodiment]

Hereinafter, a transportation refrigeration unit and a trailer in a first embodiment of the present invention will be described based on the drawings.

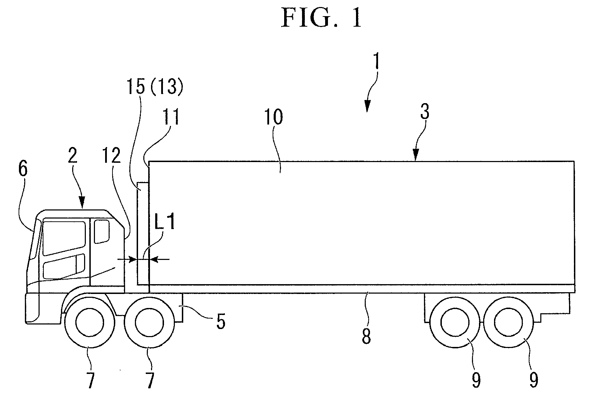

FIG. 1 is a side view of a vehicle 1 in the first embodiment of the present invention.

As shown in FIG. 1, the vehicle 1 in the embodiment includes a trailer 3 towed by a tractor 2.

The tractor 2 includes a frame 5, a cab 6, and wheels 7.

The frame 5 extends in forward and rearward directions of the tractor 2. A coupler (not shown) configured to connect the trailer 3 is provided at a rear upper surface of the frame 5, and the cab 6 serving as a driver's cab is provided in the front of the frame 5. The tractor 2 in the embodiment is exemplarily illustrated as a so-called cab-over type tractor in which the cab 6 is disposed above a traveling engine (not shown). In the cab-over type tractor, the wheels 7 are provided in the front and rear of the frame 5.

The trailer 3 includes a chassis 8, wheels 9, and a container (a transportation container) 10.

The chassis 8 is formed to extend in forward and rearward directions. The chassis 8 includes a connecting pin (not shown) in the front thereof. The connecting pin is provided to protrude downward from the chassis 8 and can be inserted into and extracted from the above-described coupler of the tractor 2. The tractor 2 and the trailer 3 are connected to each other by inserting the coupling pin into the coupler.

The wheels 9 are rotatably attached to the rear of the chassis 8. In the trailer 3 in the embodiment, two sets of wheels 9 are disposed to be arranged side by side in forward and rearward directions, but the number and the arrangement of the wheels 9 are not limited thereto.

The container 10 is formed in a box shape which is supported by the chassis 8 from below. The container 10 in the embodiment has a rectangular parallelepiped shape which length extends in forward and rearward directions in which the chassis 8 extends. The front of the container 10 is disposed above the frame 5 of the tractor 2 while the trailer 3 is connected to the tractor 2. In this state, a predetermined space is formed between a front wall 11 of the container 10 and a rear wall 12 of the cab 6.

The container 10 includes a transportation refrigeration unit 13 configured to cool air therein. The transportation refrigeration unit 13 is attached to the front wall (a front surface) 11 of the container 10. In other words, the transportation refrigeration unit 13 is disposed in the space between the front wall 11 of the container 10 and the rear wall 12 of the cab 6.

A dimension L1 of the transportation refrigeration unit 13 in forward and rearward directions is formed to be sufficiently thin not to affect a volume of the container 10. The dimension L1 of the transportation refrigeration unit 13 in forward and rearward directions is set to be as large as possible within a range in which the cab 6 of the tractor 2 does not come into contact with the transportation refrigeration unit 13 when the vehicle 1 turns. The transportation refrigeration unit 13 has a quadrangular shape which is slightly smaller than the front wall 11 viewed from the front so that it does not protrude above the container 10 or in a width direction of the vehicle.

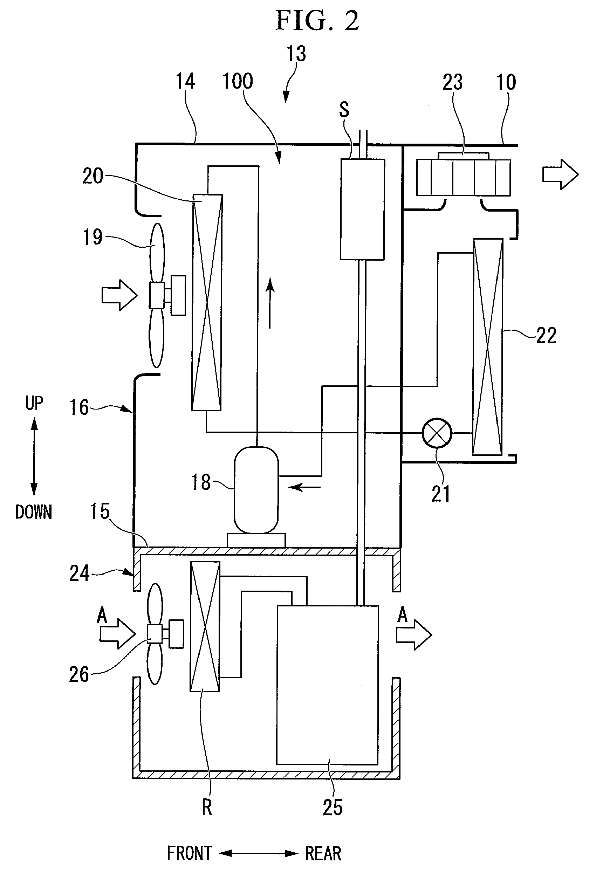

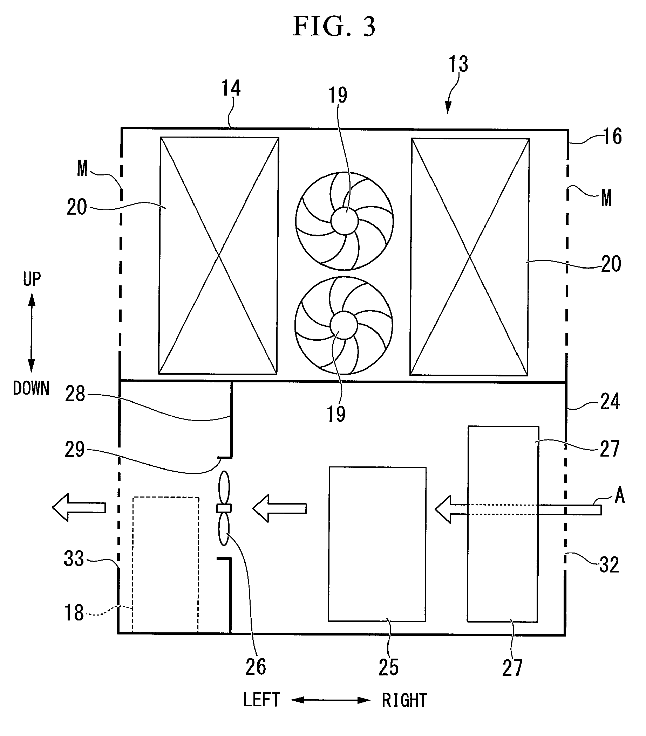

FIG. 2 is a view showing a schematic constitution of a refrigeration cycle section included in a transportation refrigeration unit in the first embodiment of the present invention. FIG. 3 is a view showing a schematic constitution of the transportation refrigeration unit in the first embodiment of the present invention.

As shown in FIG. 2, the transportation refrigeration unit 13 includes a box body 14. The box body 14 includes a partition wall 15 configured to partition its internal space into upper and lower compartments. The box body 14 includes an upper box section 16 disposed above the partition wall 15 and a lower box section 24 disposed below the partition wall 15.

A compressor 18, outdoor heat exchangers 20 (condensers), and outdoor heat exchange fans 19 which constitute a refrigeration cycle section 100 of the transportation refrigeration unit 13 are accommodated in the upper box section 16. On the other hand, a decompression mechanism 21 (an expansion valve), an indoor heat exchanger 22 (an evaporator), and an indoor heat exchange fan 23 which are other components included in the refrigeration cycle section 100 of the transportation refrigeration unit 13 are accommodated in the container 10. As shown in FIG. 3, in the upper box section 16 in the embodiment, the two outdoor heat exchange fans 19 are disposed side by side in vertical direction at a center in the width direction of the vehicle, and the outdoor heat exchangers 20 is disposed one by one at each side in the width direction of the vehicle. Upper box section 16 include exhaust ports M respectively at both sides in the width direction of the vehicle (left and right sides in FIG. 3). The exhaust ports M can discharge air A taken into the upper box section 16 through the outdoor heat exchange fans 19.

As shown in FIGS. 2 and 3, a power source 25, an electric component unit 27, etc. are accommodated in the lower box section 24 of the box body 14. For example, a diesel engine can be used as the power source 25. The above-described compressor 18 is driven using power output from the power source 25. When a diesel engine is used as the power source 25 in the embodiment, a radiator R (see FIG. 2) and a ventilation fan 26 (a blower section) which can send cooling air to the radiator R are provided in the lower box section 24. Here, in FIG. 2, for the convenience of illustration, an opening configured to take the air A into the lower box section 24 is disposed at an opposite side of the container 10 to surround the power source 25, and an opening configured to discharge the air A that is taken in is disposed at a side of the container. However, to be exact, the openings are disposed at both sides in the width direction of the vehicle like a right opening section 32 and a left opening section 33 to be described below shown in FIG. 3.

According to the above-described refrigeration cycle section 100, a refrigerant compressed by the compressor 18 is first sent to the outdoor heat exchangers 20 through pipes. The refrigerant sent to the outdoor heat exchangers 20 exchanges heat with external air supplied through the outdoor heat exchange fans 19 to be cooled. The cooled refrigerant is sent to and depressurized in the decompression mechanism 21 in the container 10 and is then sent to the indoor heat exchanger 22. The air in the container 10 is supplied to the indoor heat exchanger 22 through the indoor heat exchange fan 23. For this reason, the air in the container 10 exchanges heat with the refrigerant of the indoor heat exchanger 22 to cool the air in the container 10. Then, the refrigerant which exchanged heat with the air in the container 10 is returned to the compressor 18 in the box body 14, and the above-described cycle is iterated.

The compressor 18 in the embodiment is the compressor 18 driven by a motor, and the power source 25 serving as a diesel engine drives a power generator (not shown). The power generator converts rotational energy of the diesel engine into electric energy and supplies electric power to a battery for driving the motor (not shown) or a control circuit configured to operate the motor. As shown in FIG. 2, a silencer S of the diesel engine serving as the power source 25 in the embodiment is accommodated in the upper box section 16.

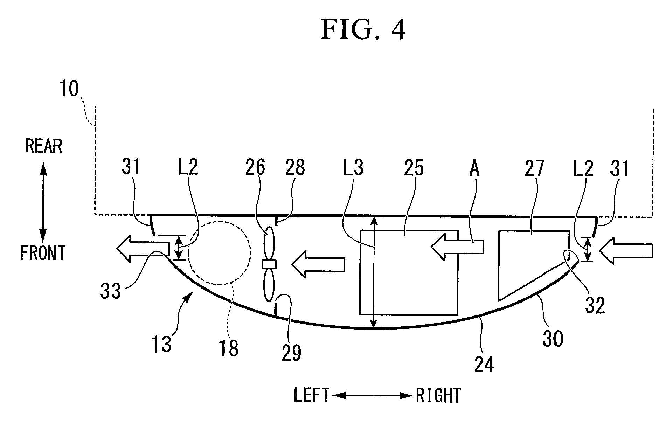

FIG. 4 is a view showing a layout of the lower box section 24 of the box body 14 from above in the first embodiment of the present invention.

As shown in FIGS. 3 and 4, the power source 25 is disposed at a center in the width direction of the vehicle of the lower box section 24. The electric component unit 27 is disposed to the right in the width direction of the vehicle relative to the power source 25 of the lower box section 24 (a first side). The above-described ventilation fan 26 is disposed to the left in the width direction of the vehicle relative to the power source 25 (a second side). The ventilation fan 26 is provided at an opening 29 of a partition wall 28 configured to separate the internal space of the lower box section 24 into left and right compartments. Here, the case in which the compressor 18 is accommodated in the upper box section 16 has been described in the above description of the upper box section 16. However, as shown in FIGS. 3 and 4, the compressor 18 may be provided at the lower box section 24. An alternative case in which the compressor 18 is provided in a left space relative to the ventilation fan 26 of the lower box section 24 is illustrated using a broken line in FIGS. 3 and 4.

As shown in FIG. 4, a decorative panel 30 is attached to the front side of the lower box section 24 opposite to the front wall 11 of the container 10. The decorative panel 30 in the embodiment is curvedly formed to be convex forward. The decorative panel 30 can be attached and detached during maintenance, etc. The right opening section 32 (the opening section) and the left opening section 33 (the opening section) are formed near left and right edges 31 of the decorative panel 30 of the lower box section 24.

Dimensions L2 of the right opening section 32 and the left opening section 33 in forward and rearward directions are formed to be smaller than a dimension L3 of the lower box section 24 in forward and rearward directions. The right opening section 32 and the left opening section 33 are outwardly open through in the width direction of the vehicle by being formed in this way.

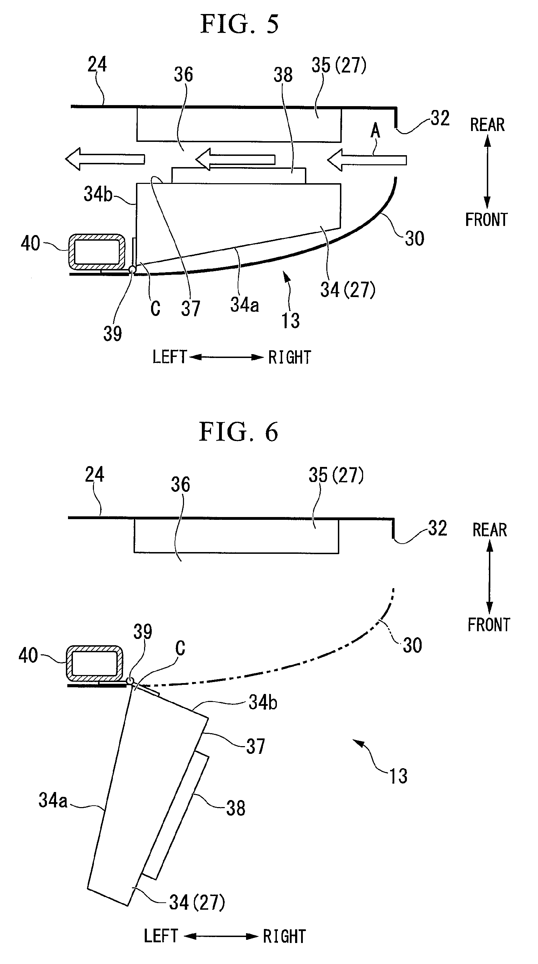

FIG. 5 is an enlarged view of an electric component unit of FIG. 4 in the first embodiment of the present invention.

As shown in FIG. 5, the electric component unit 27 includes a first electric component box 34 and a second electric component box 35.

The first electric component box 34 accommodates strong electric system facilities. Such strong electric system facilities include a plurality of apparatuses which mainly handle an alternating current (AC) (e.g., about AC 200 to 480 V). For example, the apparatuses included in the strong electric system facilities, such as an inverter configured to perform motor control on the compressor 18, a converter configured to convert AC electric power generated by a power generator into direct current (DC) electric power, and a switch configured to turn on/off such circuits can be exemplarily illustrated.

The second electric component box 35 accommodates light electric system facilities. Such light electric system facilities include a semiconductor circuit, a relay, and so on which are mainly driven by a DC current (e.g., DC 10 to 16 V). For example, the apparatuses included in the light electric system facilities, such as a control circuit configured to control opening and closing of valves (not shown) constituting the refrigeration cycle section 100, and a fuel injector of a diesel engine can be exemplarily illustrated. Strong electric system facilities, and so on handling an AC current are not accommodated in the second electric component box 35 at all. For this reason, there is no need for the light electric system facilities accommodated in the second electric component box 35 to actively radiate the heat since heat generation due to the light electric system facilities themselves never become a problem.

Here, the first electric component box 34 in the embodiment is formed by a material with good heat conductivity (e.g., a metal such as aluminum). When the first electric component box 34 is formed of a metal such as aluminum, a shield effect of the first electric component box 34 with respect to electromagnetic waves emitted from strong electric system facilities is also acquired. The second electric component box 35 may also be formed by a metal such as, for example, aluminum and stainless steel, to shield electromagnetic waves. As described above, when the second electric component box 35 is formed by a metal such as aluminum and stainless steel, a greater shield effect is acquired, and an influence of the electromagnetic waves from the strong electric system facilities on the light electric system facilities can be prevented.

The first electric component box 34 and the second electric component box 35 in the embodiment are disposed to be arranged at an interval in forward and rearward directions. Thus, a passage 36 through which the air A can flow is formed between the first electric component box 34 and the second electric component box 35. In the embodiment, the right opening section 32 is formed at a position extending the passage 36 to the right side. For this reason, the air A flowing in from the right opening section 32 smoothly flows into the passage 36.

The first electric component box 34 has a heat exchange surface 37 at a side at which the second electric component box 35 is disposed in forward and rearward directions. In other words, a portion in the first electric component box 34 forming the above-described passage 36 is the heat exchange surface 37 which can exchange heat with the air A flowing through the passage 36. The strong electric system facilities accommodated inside the first electric component box 34 are attached to the heat exchange surface 37 so as to be able to transfer heat. Thus, the strong electric system facilities can exchange heat with the air A flowing through the passage 36 by means of the heat exchange surface 37.

Also, a heat radiating fin section 38 protruding toward the second electric component box 35 is formed on the heat exchange surface 37 in the embodiment. A surface area of the heat exchange surface 37 is increased due to the fin section 38 so that the area of the heat exchange surface 37 which can come into contact with the air A passing through the passage 36 can be increased. In the embodiment, the case in which the fin section 38 is provided is an exemplary example. However, the fin section 38 may be omitted when the strong electric system facilities can be sufficiently cooled using the planar heat exchange surface 37 without the fin section 38.

FIG. 6 is a view showing a state in which the first electric component box of FIG. 5 is swung forward.

As shown in FIGS. 5 and 6, a corner C of the first electric component box 34 formed by a surface 34a facing forward and a surface 34b facing a central side in the width direction of the vehicle is supported by a frame section 40 which extends vertically via a hinge 39. The hinge 39 in the embodiment is attached such that its axis is vertical. Thus, the first electric component box 34 can swing about an axis of the hinge 39 in forward and rearward directions while the decorative panel 30 is removed.

The forward facing surface 34a of the first electric component box 34 in the embodiment is inclined towards the rear of the vehicle considered outwardly in the width direction of the vehicle to avoid the curved decorative panel 30. Thus, the first electric component box 34 is formed in a trapezoidal shape when viewed from above.

Therefore, according to the above-described first embodiment, the air A flowing into the box body 14 from the right opening section 32 can be brought into contact and exchange heat with the heat exchange surface 37 of the electric component unit 27 at the right side of the power source 25 by means of an operation of the ventilation fan 26. The strong electric system facilities connected to the heat exchange surface 37 can be cooled through the heat exchange. Also, after the power source 25 is cooled by the air A used for cooling of the strong electric system facilities, the air A can be discharged from the left opening section 33 outside the box body 14. For this reason, the strong electric system facilities can be efficiently cooled using the air A for cooling the power source 25. In addition, since the right opening section 32 and the left opening section 33 are respectively provided at a right side and a left side of the box body 14 in the width direction thereof, noise of the power source 25 can be prevented from leaking outside compared with when the plurality of openings 29 are provided at the decorative panel 30.

Also, according to the first embodiment, a space between the first electric component box 34 and the second electric component box 35 can be used as the passage 36 through which the air A flows. For this reason, a cross section of the passage 36 is reduced to increase a flow rate of the air A so that heat exchange can be efficiently performed. In addition, since the strong electric system facilities and the light electric system facilities are accommodated in separate boxes, surfaces opposite to each other serve as shields, and heat, electromagnetic waves, and so on from the strong electric system facilities can be prevented from adversely affecting the light electric system facilities. Since the first electric component box 34 is disposed in the front of the passage 36 between the first electric component box 34 and the second electric component box 35, noise of the power source 25 passing through the passage 36 can be prevented from leaking forward from the box body 14.

According to the first embodiment, the heat exchange surface 37 includes the heat radiating fin section 38 so that the surface area of the heat exchange surface 37 can be increased. For this reason, the efficiency of heat exchange can be improved to prompt heat radiation of the strong electric system facilities.

Since the transportation refrigeration unit 13 does not become larger, the load capacity of the container 10 can be prevented from decreasing. In addition, since quietness and cooling performance of the strong electric system facilities can be enhanced, merchantability of the trailer 3 can be improved.

### [Second embodiment]

Next, the transportation refrigeration unit 13 in a second embodiment of the present invention will be described based on the drawings. The second embodiment is different from the above-described first embodiment only in that structures of the electric component unit 27 differ. For this reason, the same components as those of the first embodiment will be described with the same reference numerals, and overlapping description with the first embodiment thereof will be omitted.

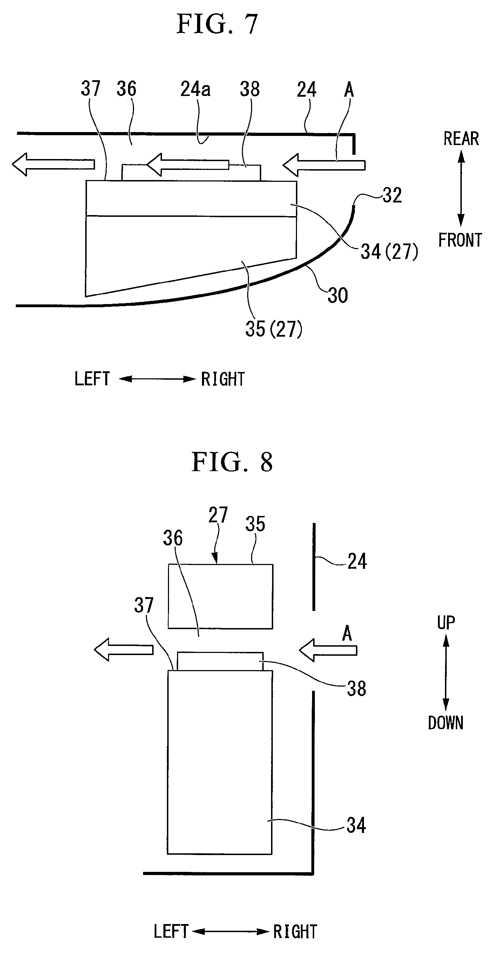

FIG. 7 is a view corresponding to FIG. 5 in the second embodiment of the present invention.

As shown in FIG. 7, the electric component unit 27 includes the first electric component box 34 and the second electric component box 35.

The first electric component box 34 and a rear wall 24a of the lower box section 24 are disposed at an interval in forward and rearward directions. A space between the first electric component box 34 and the rear wall 24a is the passage 36 of the air A flowing into the lower box section 24 by means of the ventilation fan 26 (see FIG. 4). The strong electric system facilities are accommodated in the first electric component box 34 as in the first embodiment. A surface of the first electric component box 34 facing the rear wall 24a is the heat exchange surface 37. The strong electric system facilities accommodated in the first electric component box 34 are attached to the heat exchange surface 37 so as to be able to transfer heat. Also, the heat radiating fin section 38 is formed on the heat exchange surface 37 as in the first embodiment.

The second electric component box 35 is disposed in the front of the first electric component box 34 and is integrally disposed with the first electric component box 34. Only the light electric system facilities are accommodated in the second electric component box 35. The electric component unit 27 with such a constitution may be configured to be swingable with respect to the frame section 40 (see FIGS. 5 and 6) using the hinge 39 as in the first embodiment. Also, when the first electric component box 34 and the second electric component box 35 are not formed as a single body, only the second electric component box 35 disposed in the front may be attached to be swingable with respect to the frame section 40 via the hinge 39 as in the first embodiment.

Therefore, according to the above-described second embodiment, the passage 36 through which the air A passes can be disposed closer to the container 10 than in the first embodiment. In other words, since the first electric component box 34 and the second electric component box 35 are disposed in the front of the passage 36, noise from the power source 25 can be further prevented from being transferred to the front of the vehicle 1 through the passage 36 and leaking. Also, the right opening section 32 can be disposed even closer to the container 10. For this reason, for example, the right opening section 32 and the left opening section 33 can be maximally separated from each other. Thus, the air A discharged from the left opening section 33 can be prevented from flowing in again from the right opening section 32. As a result, the cooling efficiency can be improved.

### [Third embodiment]

Next, the transportation refrigeration unit 13 in a third embodiment of the present invention will be described based on the drawings. The third embodiment is different from the above-described first embodiment only in that structures of the electric component unit 27 differ. For this reason, the same components as those of the first embodiment will be described with the same reference numerals, and an overlapping description with the first embodiment thereof will be omitted.

FIG. 8 is a view taken by viewing an electric component unit from the front in the third embodiment of the present invention.

As shown in FIG. 8, the electric component unit 27 in the embodiment includes the first electric component box 34 and the second electric component box 35.

The first electric component box 34 and the second electric component box 35 are disposed at an interval in vertical direction. The strong electric system facilities are accommodated in the first electric component box 34, and the light electric system facilities are accommodated in the second electric component box 35. In the embodiment, the second electric component box 35 is disposed above the first electric component box 34. An upper surface of the first electric component box 34 is the heat exchange surface 37, and the heat radiating fin section 38 is formed on the heat exchange surface 37.

Therefore, according to the above-described third embodiment, the space between the first electric component box 34 and the second electric component box 35 can be used as the passage 36 through which the air A flows as in the first embodiment. For this reason, the cross section of the passage 36 is reduced to increase the flow rate of the air A so that heat exchange can be efficiently performed. In addition, since the strong electric system facilities and the light electric system facilities are accommodated in separate boxes, heat, electromagnetic waves, and so on from the strong electric system facilities can be prevented from adversely affecting the light electric system facilities.

Also, according to the third embodiment, since the first electric component box 34 and the second electric component box 35 are disposed to be vertically arranged, access to both of the first electric component box 34 and the second electric component box 35 is enhanced without a support structure of the electric component unit 27 becoming complicated. For this reason, a load applied to an operator during maintenance can be reduced.

The first electric component box 34 and the second electric component box 35 are disposed to be vertically arranged so that the first electric component box 34 and the second electric component box 35 are above and below the passage 36 between the first electric component box 34 and the second electric component box 35. Thus, noise of the power source 25 passing through the passage 36 can be prevented from leaking in upward and downward directions of the box body 14.

The present invention is not limited to the above-mentioned embodiments and includes various modified examples of the above-described embodiments within a range not departing from the scope of the present invention. In other words, specific shapes and configurations described in the embodiments are merely examples and can be appropriately changed.

For example, the case in which the second electric component box 35 is disposed above the first electric component box 34 has been described in the above-described third embodiment, but the arrangement of the first electric component box 34 and the second electric component box 35 may be changed.

The cases in which the heat exchange surface 37 is provided only at a side of the passage 36 of the first electric component box 34 have been described in the above-described embodiments, but another surface forming the first electric component box 34 may be used as the heat exchange surface 37.

A diesel engine is used as an exemplary example of the power source 25 in the above-described embodiments. However, the power source 25 is not limited to a diesel engine. An internal combustion engine other than a diesel engine may be used. In addition, the cases in which the power generator is driven by the diesel engine, and the compressor 18 is driven using the power have been described in the embodiments. However, the internal combustion engine may be omitted and the compressor 18 may be driven using the power charged into a rechargeable battery. In this case, after the electric component unit 27 is cooled using the air A flowing into the lower box section 24 by means of the ventilation fan 26, the rechargeable battery can be cooled.

The flash mount type transportation refrigeration unit 13 has been described as an example in the above-described embodiments, but the present invention may be applied to a so-called nose mount type transportation refrigeration unit 13.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

### [Reference Signs List]

1 vehicle
2 tractor
3 trailer
5 frame
6 cab
7 wheels
8 chassis
9 wheels
10 container (transportation container)
11 front wall
12 rear wall
13 transportation refrigeration unit
14 box body
15 partition wall
16 upper box section
18 compressor
19 outdoor heat exchange fans
20 outdoor heat exchangers (condensers)
21 decompression mechanism (an expansion valve)
22 indoor heat exchanger (evaporator),
23 indoor heat exchange fan
24 lower box section
24a rear wall
25 power source
26 ventilation fan
27 electric component unit
28 partition wall
29 opening
30 decorative panel
31 edges
32 right opening section (opening section)
33 left opening section (opening section)
34 first electric component box
35 second electric component box
36 passage
37 heat exchange surface
38 fin section
39 hinge
40 frame section
100 refrigeration cycle section
C corner
M exhaust ports
R radiator
S silencer

## Claims

1. A transportation refrigeration unit (13) comprising:
a transportation container (10);
a box body (14) provided at a front side of the transportation container and having opening sections (32, 33) at both sides in a width direction of the transportation container;
a refrigeration cycle section (100) having an evaporator (22) disposed in the transportation container and a condenser (20), a compressor (18), and an expansion valve (21) disposed in the box body;
a power source (25) provided at a center in a width direction in the box body and configured to generate power driving the compressor;
a blower section (26) disposed in the box body, configured to flow air into the box body from one (32) of the opening sections provided at a first side in the width direction of the transportation container, and configured to discharge the air in the box body from the other opening section (33) provided at a second side in the width direction of the transportation container; and
an electric component unit (27) disposed in the box body closer to the first side in the width direction of the transportation container than the power source and having strong electric system facilities configured to drive the compressor and light electric system facilities configured to control driving of the refrigeration cycle section,
wherein a portion of an outer surface of the electric component unit is a heat exchange surface (37) which is capable of exchanging heat with the air flowing into the box body and flowing in the width direction of the transportation container, and at least the strong electric system facilities are connected to the heat exchange surface so as to be capable of transferring heat.

2. The transportation refrigeration unit (13) according to claim 1, wherein the electric component unit includes a first electric component box (34) configured to accommodate the strong electric system facilities and a second electric component box (35) configured to accommodate the light electric system facilities,
the first electric component box and the second electric component box are disposed to be arranged at an interval in forward and rearward directions, and
the first electric component box has the heat exchange surface at a side at which the second electric component box is disposed in forward and rearward directions.

3. The transportation refrigeration unit (13) according to claim 2, further comprising: a frame section (40) configured to support one of the first electric component box and the second electric component box which is disposed in the front to be swingable in forward and rearward directions.

4. The transportation refrigeration unit (13) according to claim 1, wherein the electric component unit includes;
a first electric component box (34) configured to accommodate the strong electric system facilities and having the heat exchange surface; and
a second electric component box (35) configured to accommodate the light weak electric system facilities and configured such that the first electric component box and the second electric component box are disposed at an interval in vertical direction,
wherein the first electric component box has the heat exchange surface at a side at which the second electric component box is disposed in vertical direction.

5. The transportation refrigeration unit (13) according to any one of claims 1 to 4, wherein the heat exchange surface (37) has a heat radiating fin section (38).

6. A trailer (3) comprising a transportation refrigeration unit (13) according to any one of claims 1 to 5.
